# EUROPÄISCHE PATENTANMELDUNG

(11) **EP 4 492 585 A1**
(43) Veröffentlichungstag der Anmeldung: **15.01.2025**
(21) Anmeldenummer: 24000085.1
(22) Anmeldetag: 01.07.2024
(51) Int. Cl.: H01R 13/508, H01R 13/518

(54) **STECKVERBINDER MIT KONTAKTEINSATZBEFESTIGUNG**

(30) Priorität: 13.07.2023 DE 102023118585
(71) Anmelder: HARTING Electric Stiftung & Co. KG, 32339 Espelkamp (DE)
(72) Erfinder: Ferderer, Albert, 32339 Espelkamp (DE)
(74) Vertreter: Eisenführ Speiser

(57) **Zusammenfassung**

Die Erfindung geht aus von einem elektrischen Steckverbinder, aufweisend ein Steckverbindergehäuse mit einer Kabeldurchführungsöffnung, einer Verbindungsöffnung, zumindest einer ersten Halteform und zumindest einem Kontakteinsatz. Dabei nimmt der Kontakteinsatz zumindest ein Kontaktelement und/oder zumindest ein Steckverbinder-modul und/oder ein halbes Steckverbindermodul auf. Der Kontakteinsatz weist zumindest einen Befestigungsrahmen aufweist, welcher zumindest eine zweite Halteform aufweist, wobei die zweite Halteformen mit der ersten Halteform korrespondiert. Die korrespondierenden Halte-formen, die erste Halteform und die zweite Halteform, werden mithilfe eines Haltemittels lösbar verbunden, wobei der Befestigungsrahmen mit Hilfe des Haltemittels im Steckverbindergehäuse gehalten wird. Erfindungsgemäß weist das Haltemittel zumindest ein Fixierkörper, ein Federelement und eine Fixierelement auf.

## Beschreibung

Die Erfindung geht aus von einem Steckverbinder mit Kontakteinsatzbefestigung nach der Gattung des unabhängigen Anspruchs 1.

Weiterhin geht die Erfindung aus von einem Verfahren zur Verbindung eines Kontakteinsatzes mit einem Steckverbindergehäuse eines Steckverbinders gemäß Anspruch 13.

Derartige Kontakteinsatzbefestigungen werden benötigt, um einen Kontakteinsatz, wahlweise ausgeführt als Modulhalterahmen zur Aufnahme von Steckverbindermodulen und/oder halben Steckverbindermodulen, vorzugsweise lösbar in einem Steckverbindergehäuse zu befestigen.

### Stand der Technik

Industriesteckverbinder, auch als schwere Steckverbinder oder Rechtecksteckverbinder bezeichnet, weisen üblicherweise einen Kontakteinsatz auf, welcher mittels Schraubverbindungen in dem Steckverbindergehäuse lösbar befestigt ist. Der Kontakteinsatz kann dabei direkt zur Aufnahme von Kontaktelementen ausgeführt sein. Alternativ eröffnet der Stand der Technik auch clevere Lösungen, in denen ein Kontakteinsatz als Halterahmen ausgeführt ist, welcher wiederrum ein oder eine Vielzahl gleicher und/oder sich voneinander unterscheidender Steckverbindermodule aufnimmt. Dabei können Steckverbindermodule auch aus mehreren, modularen Bausteinen bestehen, welche sich ebenfalls gleichen und/oder voneinander unterscheiden können.

Die DE 197 07 120 C1 eröffnet einen Steckverbinder mit einem Kontaktträger, wobei der Kontaktträger als Halterahmen für Steckverbindermodule ausgeführt ist. Der Kontaktträger wird dabei regulär mittels Schraubverbindungen in dem Steckverbindergehäuse befestigt.

Nachteilig bei den im Stand der Technik vorrangig genutzten Verbindungstechnik ist die vergleichsweise hohe Dauer, die benötigt wird, um einen Kontaktträger mittels der üblicherweise vier, an den Ecken der Kontaktträger vorgesehenen Schraubverbindungen in ein Steckverbindergehäuse lösbar einzubringen.

### Aufgabenstellung

Die Aufgabe der Erfindung besteht darin, einen Steckverbinder anzubieten, welcher in einfacher und schneller Weise mit einem Kontakteinsatz ausgerüstet wird und dabei der Kontakteinsatz lösbar und mit festem Sitz in einem Steckverbindergehäuse des Steckverbinders befestigt wird.

Weiterhin besteht eine Aufgabe der Erfindung darin, ein Verfahren zur einfachen und schnellen Befestigung eines Kontakteinsatzes in einem Steckverbindergehäuse zu eröffnen, welches den Kontakteinsatz lösbar und mit festem Sitz in dem Steckverbindergehäuse in Eingriff bringt.

Die Aufgabe wird durch den Gegenstand des unabhängigen Anspruchs 1, sowie dem Verfahren des unabhängigen Anspruchs 13 gelöst.

Vorteilhafte Ausgestaltungen der Erfindung sind in den Unteransprüchen und der folgenden Beschreibung angegeben.

Die Erfindung geht aus von einem elektrischen Steckverbinder, aufweisend ein Steckverbindergehäuse mit einer Kabeldurchführungsöffnung, einer Verbindungsöffnung, zumindest einer ersten Halteform und zumindest einem Kontakteinsatz. Dabei nimmt der Kontakteinsatz zumindest ein Kontaktelement und/oder zumindest ein Steckverbindermodul und/oder ein halbes Steckverbindermodul auf. Der Kontakteinsatz weist zumindest einen Befestigungsrahmen aufweist, welcher zumindest eine zweite Halteform aufweist, wobei die zweite Halteformen mit der ersten Halteform korrespondiert. Die korrespondierenden Halteformen, die erste Halteform und die zweite Halteform, werden mithilfe eines Haltemittels lösbar verbunden, wobei der Befestigungsrahmen mit Hilfe des Haltemittels im Steckverbindergehäuse gehalten wird. Erfindungsgemäß weist das Haltemittel zumindest ein Fixierkörper, ein Federelement und eine Fixierelement auf.

Als Steckverbindergehäuse sind grundsätzlich Umhausungen von mit Kontaktelementen versehenen Kabelenden zu verstehen. Steckverbindergehäuse werden üblicherweise aus Metall oder Kunststoff gefertigt. Im Falle eines Kunststoffgehäuses werden auch elektrisch leitende Kunststoffe eingesetzt. Weiter gibt es Steckverbindergehäuse, welche aus Kompositwerkstoffen ausgeformt werden, wobei die Gehäuse aus Metall und Kunststoff oder verschiedenen Metallen oder verschiedenen Kunststoffen gebildet sein kann.

Als Kabeldurchführungsöffnung sind besonders Ausnehmungen aus dem Steckverbindergehäuse zu verstehen, welche dazu vorgesehen sind, ein oder mehrere elektrische Adern und oder Kabel hindurchzuführen. Diese Kabeldurchführungsöffnungen werden zumeist von Kabelverschraubungen komplettiert, sodass durchgeführte Objekte gegen Fremdmedien, wie Staub, Schmutz oder Fluide wenigstens teilweise abgedichtet sind.

Mit dem Begriff Verbindungsöffnung ist eine Ausnehmung aus dem Steckverbindergehäuse gemeint, welche zur Verbindung mit einem Gegensteckverbinder, beziehungsweise dem Gegensteckverbindergehäuse und/oder den darin angeordneten Kontaktelementen ausgeformt ist.

Der Begriff erste Halteform meint eine Einrichtung an oder innerhalb des Steckverbindergehäuses, welches dazu eingerichtet ist, die Befestigung weiterer Bauteile des Steckverbinders zu ermöglichen. Üblicherweise werden in Steckverbindergehäusen Sacklochbohrungen mit Innengewinde eingesetzt, in welche eine Schraube zur Befestigung weiterer Bauteile eingebracht wird. Die erste Halteform ragt dabei zumeist in das Steckverbindergehäuse herein, wodurch weitere Bauteile in Richtung eines Innenraums des Steckverbindergehäuses gesichert sind.

Hinter der Formulierung Kontakteinsatz verbergen sich verschiedene Optionen. Zunächst sind einfache Isolierkörper und/oder Kontaktträger gemeint, welche zur Aufnahme und/oder räumlichen und/oder elektrischen Trennung von Kontaktelementen eingesetzt werden. Im Stand der Technik sind Modulhalterahmen bekannt, welche im Fall der vorliegenden Erfindung in bestückter Ausführung, also mit aufgenommenen Modulen, ebenfalls als Kontakteinsatz verstanden werden. Derartige Modulhalterahmen sind zur Aufnahme verschiedener und/oder gleichartiger Steckverbindermodule ausgelegt, wobei jedes Steckverbindermodul für sich als Kontakteinsatz oder Kontaktträger verstanden wird. Neuerdings gibt es auch eine Vielzahl von Steckverbindermodulen, welche aus gleichen und/oder sich voneinander unterscheidenden Teilmodulen gebildet werden können.

Als Befestigungsrahmen sind zum einen angeformte und/oder montierte Rahmen gemeint, welche zur Befestigung eines Kontakteinsatzes in einem Steckverbindergehäuse ausgeführt sind. Auch ein Modulhalterahmen weist üblicherweise die in dieser Erfindung gewünschten Charakteristika eines Befestigungsrahmens auf. Insbesondere im Fall einfacher Isolierkörper können Befestigungsrahmen mehrteilig ausgeführt und an dem Isolierkörper angeordnet sein.

Der Begriff zweite Halteform meint eine Einrichtung an oder innerhalb des Befestigungsrahmens, welches dazu eingerichtet ist, die Befestigung eines Kontaktträgers mit dem Steckverbindergehäuse zu ermöglichen. Üblicherweise werden in Befestigungsrahmen Durchgangsbohrungen eingesetzt, durch welche eine Schraube zur Befestigung mit dem Steckverbindergehäuse geführt wird. Die zweite Halteform ragt dabei zumeist nach außen, also von dem Kontaktträger weg.

Als Haltemittel ist ein Element gemeint, welches zur Verbindung der ersten Halteform mit der zweiten Halteform vorgesehen ist. Anders gesagt wird das Haltemittel genutzt, um einen Kontakteinsatz in einem Steckverbindergehäuse zu befestigen. Idealerweise ist das Haltemittel dazu ausgelegt, um den Kontakteinsatz lösbar mit dem Steckverbindergehäuse zu verbinden. Erfindungsgemäß ist das Haltemittel aus verschiedenen Bauteilen zusammengesetzt. Unter diesen Bauteilen befinden sich zumindest ein Fixierkörper, ein Federelement und ein Fixierelement. Für verschiedene Ausführungsformen können die benannten Bauteile aus mehreren Elementen bestehen. So ergibt es möglicherweise Sinn, dass der Fixierkörper aus zumindest zwei Elementen besteht, beispielsweise ein gedrehter Stift und ein daran angeordneter Kopf und/oder Flansch. In besonders vorteilhafter Weise kann das Federelement als zumindest eine Tellerfeder und/oder eine Spiralfeder und/oder eine Blattfeder und/oder Wellenfeder und/oder eine Gummifeder ausgeführt sein. Kombinationen der genannten und weiteren Federelemente sind selbstverständlich denkbar.

Das derart gestaltete Halteelement ermöglicht eine einfache, schnelle und zuverlässige Montage des Kontakteinsatzes in dem Steckverbindergehäuse. Besonders sinnvoll ist dabei die Ausführung des Fixierkörpers als stiftartiges Element mit einem Kopf und/oder Flansch, welcher die zweite Halteform des Befestigungsrahmens überdeckt. Auf diese Weise kann die Halteform und damit einhergehend, der Kontakteinsatz nicht über das Halteelement gelangen, sodass die sichere Verbindung garantiert ist.

Eine Ausführungsform sieht vor, dass das Haltemittel als Niet, insbesondere als Spreizniet, auszuführen. Die Begrifflichkeiten können dabei wie folgt zugeordnet werden; Der Fixierkörper ist von dem Nietkopf gebildet, die Spreizschenkel, oder zumindest deren Anbindung an den Nietkopf stellen das Federelement dar, während der Nietstift als Fixierelement angesehen wird. Um den Spreizniet lösbar auszuführen, wird vorgeschlagen den Nietstift mit einem Kopf auszuführen, welcher es ermöglicht, den Stift aus dem betätigten Spreizniet zu entfernen.

Alternativ hierzu ist das Haltemittel als Schnellverschluss, insbesondere als Vierteldrehverschluss ausgeführt. In diesem Fall stellt der Verschlussstift mit Rastbolzen den Fixierkörper da, die üblicherweise eingesetzten Tellerfeder und/oder Spiralfedern sind selbstverständlich als Federelement zu erkennen und als Fixierelement ist hierbei eine Hülse mit Kurvenbahn und oder eine an der ersten Halteform angeordneten Kurvenbahn zu verstehen. Alternativ kann zur Kurvenbahn auch eine einfache Ausnehmung vorgesehen sein, welche mit dem Rastbolzen korrespondiert. Weitere Ausführungen eines Vierteldrehverschlusses sind im Stand der Technik bekannt und können ebenfalls bedacht werden.

In einer weiterentwickelten Ausführungsform weist das Haltemittel ein Löseelement auf. Als Löseelement sind Bauteile vorgesehen, welche dazu ausgelegt sind, das Haltemittel in einfacher Weise in einen Ausganszustand zurückzuführen, sodass sowohl das Haltemittel; als auch die somit befestigten Kontakteinsätze vom Steckverbindergehäuse wieder entfernt werden können. Besonders geschickt ist eine im wesentlichen hülsenförmige Ausführung des Löseelements. Die Hülse kann dabei als röhrenförmiger C-Clip ausgeführt sein. Anders ausgedrückt kann ein Löseelement einen Schlitz aufweisen; welcher es besonders in Kombination mit einteilig ausgeführten Fixierkörpern ermöglicht, beide Bauteile in einfacher weise miteinander in Verbindung zu bringen.

Eine weitere Ausführungsform sieht vor, dass das Löseelement zumindest mit einer Fahne in Verbindung steht, welche nach Betätigung des Haltemittels im Wesentlichen vom Fixierkörper weist und/oder ragt, wodurch der Eingriff des Haltemittels in der Halteeinrichtung signalisiert ist. Durch eine derartige Signalisierung kann die Montage weiter vereinfacht werden, was besonders bei einem Vierteldrehverschluss und/oder einer Push-Push Verriegelungen in vorteilhafter Weise die sichere Betätigung des Haltemittels anzeigt.

Eine weitere Ausführungsform sieht vor, dass das Fixierelement mit der ersten Halteform des Steckverbindergehäuses in Eingriff gebracht ist. Damit ist gemeint, dass eine Rasthülse eines Push-Push Mechanismus in einer ersten Halteform verschraubt, verpresst oder verklebt ist. Anstelle einer Rasthülse kann in ähnlicher Weise eine Rastfeder, ein Rasthaken oder ein vergleichbares Element eingebracht werden. Alternativ kann im Fall eines Vierteldrehverschlusses eine Passform für den Rastbolzen des Verschlussstifts in die erste Halteform eingearbeitet sein, oder durch ein Bauteil wie eine Hülse eingebracht werden. Eine derartige Hülse kann vergleichbar einem Fixierelement eines Push-Push Mechanismus verschraubt, verpresst oder verklebt sein.

Eine weitere Ausführungsform sieht vor, dass das Haltemittel durch eine erste Druckbewegung des Fixierkörpers in Richtung des Steckverbindergehäuses der Fixierkörper lösbar mit dem Fixierelement in Eingriff gebracht wird. Hierzu wird der Fixierkörper beispielsweise mit einer Vertiefung versehen, in welche bei der ersten Druckbewegung ein Fixierelement zumindest teilweise eingreift. In gewissen Ausführungen, beispielsweise bei stiftartigen Fixierkörpern, kann es sinnvoll sein, die Vertiefung umlaufend auszubilden, sodass auch ein den Fixierkörper röhrenförmig umgebendes Fixierelement problemlos in die Vertiefung eingreift. Verrastmechanismen wie Push-In-Mechanismen, Push-Pull-Mechanismen und/oder Push-Push-Mechanismen können daher vorgesehen sein.

Eine weitere Ausführungsform sieht vor, dass das durch eine zweite Druckbewegung des Fixierkörpers in Richtung des Steckverbindergehäuses der Fixierkörper aus dem Fixierelement gelöst wird. Derartige Verriegelungsarten sind beispielsweise von Kugelschreibern bekannt und werden als Kugelschreibermechanismus oder Push-Push-Mechanismus bezeichnet. Vorzugsweise wird hierzu der Fixierkörper mit einem Löseelement versehen, wobei das Löseelement als Hülse innerhalb einer umlaufenden Vertiefung entlang der Längsachse des Fixierkörpers verschiebbar angeordnet ist. Das Fixierelement wird als Hülse ausgeführt, welche sich entgegen der Steckrichtung zumindest in ihrem Endbereich konisch verjüngt. Zumindest der sich verjüngende Teil des Fixierelements ist mir längs gerichteten Aussparungen versehen, wodurch eine elastische Verformung ermöglicht wird. Durch erstmalige Druckbewegung des Fixierkörpers wird also das Löseelement von dem Fixierelement verdrängt. Das Fixierelement greift sodann in die Vertiefung des Fixierkörpers ein. Das Federelement presst den Fixierkörper in Steckrichtung. Da das Fixierelement jedoch in die Vertiefung des Fixierkörpers eingreift, bleiben der Kontakteinsatz und das Steckverbindergehäuse durch die Kraft der Federspannung des Federelements verbunden.

Eine weitere Ausführungsform sieht vor, dass das Haltemittel durch eine erste Rotationsbewegung entlang der Längsachse des Fixierkörpers der Fixierkörper lösbar mit dem Fixierelement in Eingriff gebracht wird. Hierbei ist als Rotationsbewegung zumindest eine Teilumdrehung aber höchstens eine volle Umdrehung des Fixierkörpers gemeint. Auf diese Weise ist eine Unterscheidung zu regulären Schraubverbindungen gewährleistet, welche in der Regel mehrere Gewindegänge, also volle Umdrehungen benötigen.

Eine weitere Ausführungsform sieht vor, dass das Haltemittel, insbesondere der Fixierkörper zusätzlich mit einer ersten Druckbewegung beaufschlagt wird. Diese Druckbewegung wird besonders bei bekannten Vierteldrehverschlüssen benötigt, um den Rastbolzen des Fixierkörpers mit der Kurvenbahn des Fixierelements in Eingriff zu bringen. Das Haltemittel wird durch eine zweite Rotationsbewegung entlang der Längsachse des Fixierkörpers der Fixierkörper von dem Fixierelement im Wesentlichen gelöst. Die zweite Rotationsbewegung wird dabei entgegen der Rotationsrichtung der ersten Rotationsbewegung ausgeführt.

Weiterhin eröffnet die Erfindung ein Verfahren zur Verbindung eines Kontakteinsatzes mit einem Steckverbindergehäuse eines Steckverbinders, wobei das Steckverbindergehäuse zumindest eine erste Halteform aufweist und wobei der Kontakteinsatz zumindest eine zweite Halteform aufweist, wobei die erste Halteform mit der zweiten Halteform korrespondiert, wobei zur Verbindung des Kontakteinsatzes mit dem Steckverbindergehäuse zumindest ein Haltemittel eingesetzt wird, welches einen Fixierkörper ein Fixierelement und ein Federelement aufweist.

In einer weiteren Ausführungsform greift das Haltemittel durch eine erste Druckbewegung auf den Fixierkörper in Richtung des Steckverbindergehäuses in ein mit der ersten Halteform in Eingriff stehendes Fixierelement ein, wobei der Kontakteinsatz mittels des Haltemittels in der Steckrichtung gegen versehentliches Lösen gesichert ist und entgegen der Steckrichtung von der ersten Halteform gegen versehentliches Lösen gesichert ist.

Eine weitere Ausführungsform sieht vor, dass eine zweite Druckbewegung auf den Fixierkörper entgegen der Steckrichtung das Haltemittel derart aus der ersten Halteform löst, dass der Fixierkörper aus der ersten Halteform entfernt werden kann.

Eine weitere Ausführungsform sieht vor, dass das Haltemittel durch eine erste Rotationsbewegung entlang der Längsachse des Fixierkörpers in ein mit der ersten Halteform in Eingriff stehendes Fixierelement eingreift und das der Kontakteinsatz mittels des Haltemittels in der Steckrichtung gegen versehentliches Lösen gesichert ist und entgegen der Steckrichtung von der ersten Halteform gegen versehentliches Lösen gesichert ist.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Schnittdarstellung eines erfindungsgemäßen Haltemittels in einem Steckverbinder;
- Fig. 2: eine rotierte perspektivische Schnittdarstellung eines erfindungsgemäßen Haltemittels in einem Steckverbinder;
- Fig. 3: eine perspektivische Schnittdarstellung eines alternativen erfindungsgemäßen Haltemittels in einem Steckverbinder;
- Fig. 4: eine perspektivische Darstellung eines erfindungsgemäßen Haltemittels in einem Befestigungsrahmen.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

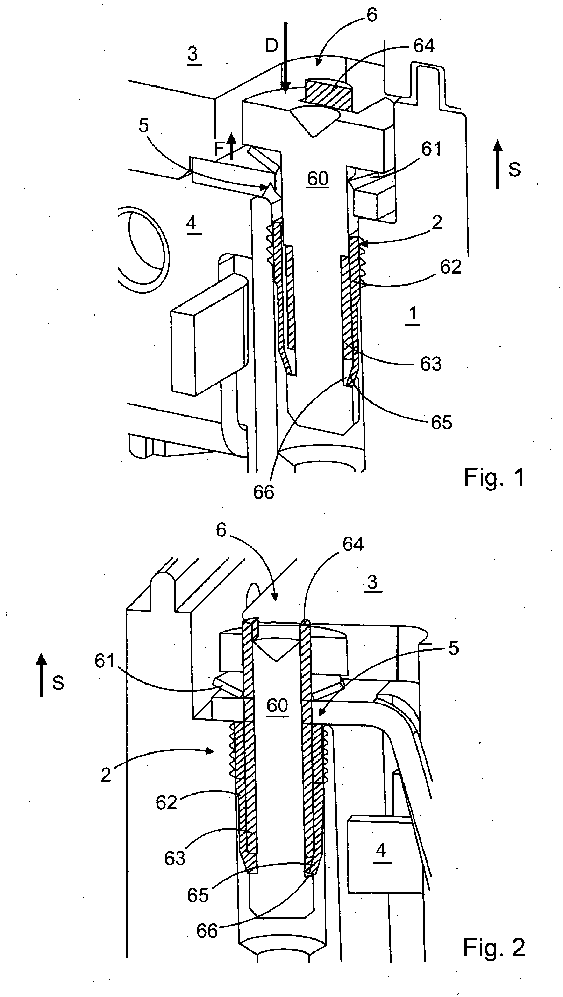

Die Figuren Figur 1 und Figur 2 zeigen einen Ausschnitt eines elektrischen Steckverbinders, wobei ein Teil des Steckverbindergehäuses 1 zu erkennen ist. Das Steckverbindergehäuse 1 weist dabei ein Sackloch auf, welches mit einem Innengewinde versehen ist und im Sinne der Erfindung die erste Halteform 2 bildet. Weiter ist ein Bereich eines Kontaktträgers 3 zu erkennen, welcher zumeist zur Aufnahme elektrischer Kontaktelemente (nicht dargestellt) ausgeführt ist. Der Kontaktträger 3 ist üblicherweise aus einem Kunststoff geformt. Dabei ist der Kontaktträger 3 von einem Befestigungsrahmen 4 eingefasst. Der Befestigungsrahmen 4 kann einteilig ausgeführt sein. Alternativ ist der Befestigungsrahmen 4 aus zwei oder mehr einzelnen Elementen geformt. Der Befestigungsrahmen 4 weist eine zweite Halteform 5 auf, welche in den Darstellungen als einfache Durchgangsöffnung ausgeführt ist. Durch die zweite Halteform 5 geführt in der ersten Halteform 2 eingreifend befindet sich ein Haltemittel 6. Das Haltemittel 6 ist mehrteilig ausgeführt, wobei ein Fixierkörper 60 mit einem zylindrischen Kopf 67 ausgeführt ist, welcher an seiner breitesten Stelle einen größeren Durchmesser aufweist, als der Durchmesser der zweiten Halteform 5. Das Haltemittel 6 weist weiterhin ein Federelement 62 auf, welches in der Figur 1 als Tellerfeder dargestellt ist. Selbstverständlich sind auch zwei oder mehr Tellerfedern einsetzbar, um möglicherweise den Halteeffekt zu verbessern: Sinnvollerweise ist der Außendurchmesser des Federelements vergleichbar dem Durchmesser des Kopfes 67. Weiterhin gehört ein Fixierelement 62 zu dem Haltemittel 6, wobei das Fixierelement 62 in der ersten Halteform 2 angeordnet ist. In einfacher Weise ist das Fixierelement 62 in der ersten Halteform 2 eingeschraubt. Alternative Befestigungen des Fixierelements 62 in der ersten Halteform 2 sind denkbar und können Vorteile bieten. Hierbei können besonders Verfahren wie Einpressen oder Einkleben vorgesehen sein. Das Fixierelement 62 des Haltemittels 6 weist entgegen der Steckrichtung S weisend ein Rastelement 65 auf. Das Rastelement 65 ist dazu ausgelegt, mit einer Rastform 66 des Fixierkörpers 60 zu interagieren. In geschickter Weise weist der Fixierkörper 60 weiterhin ein Löseelement 63 auf. Das Haltemittel 6 wird also bei einer erstmaligen Druckbewegung D entgegen der Steckrichtung S bewegt, wobei das Fixierelement 62 das Löseelement 63 zunächst zurückhält. Während das Löseelement 63 zurückgehalten wird, kann das Rastelement 65 des Fixierelements 62 in die Rastform 66 des Fixierkörpers 60 eingreifen. Durch die Federkraft F in Steckrichtung S gezwungen, wird der Befestigungsrahmen 4 in dem Steckverbindergehäuse 1 fixiert. Eine zweite, tiefere Druckbewegung D befördert das Löseelement 63 entlang dem Fixierelement 62 entgegen der Steckrichtung S, sodass das Rastelement 65 aus der Rastform 66 herausgelöst wird. Das Rastelement 65 kann dabei das Löseelement 63 kurzfristig fixieren, sodass das Rastelement 65 bei einem zurückfahren des Fixierkörpers 60 nicht erneut in die Rastform 66 eingreifen kann. Dadurch ist das Haltemittel 6 wieder gelöst, sodass der Befestigungsrahmen 4 aus dem Steckverbindergehäuse 1 entnommen werden kann. Anstelle einer zweiten Druckbewegung D zum Lösen des Haltemittels 6 weist das Lösemittel 63 eine Fahne 64 auf, welche nach der ersten Druckbewegung D derart in Position verbleibt, dass ein Eingriff des Rastelements 65 in der Rastform 66 angezeigt ist. Diese Fahne 64 kann idealerweise genutzt werden, um das Löseelement 63 entgegen der Steckrichtung S zu bewegen, um den Lösevorgang des Rastelements 65 aus der Rastform 66 einzuleiten.

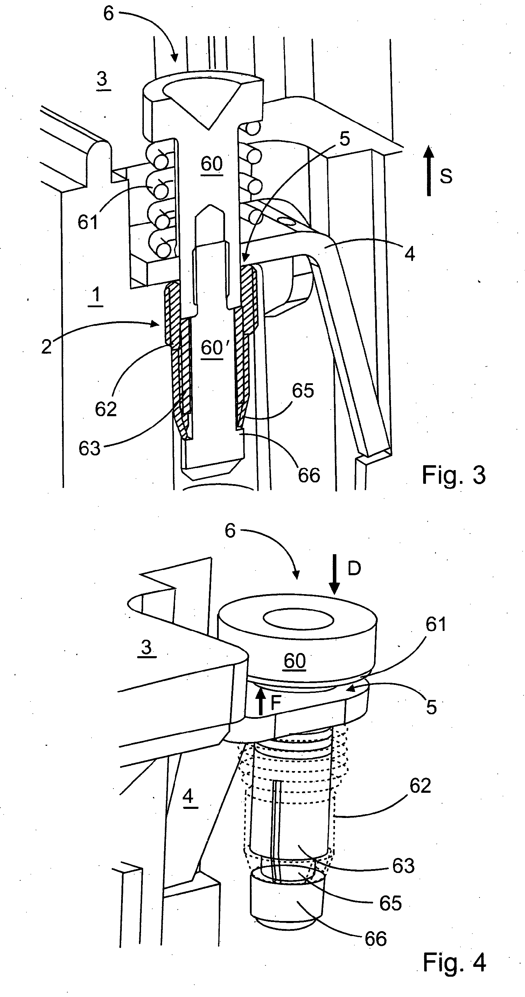

In der Figur 3 wird ein alternatives Ausführungsbeispiel gezeigt. Besonders deutlich ist gezeigt, dass der Fixierkörper 60 zweiteilig ausgeführt ist, und zwar aus Fixierkörper 60 und Fixierkörper 60'. Dieses Ausführungsbeispiel ermöglicht es insbesondere, das Löseelement 63 als röhrenförmige Hülse auszuführen, während die einteilige Ausführungsform der Figuren Figur 1, Figur 2 und Figur 4 es benötigen, dass das Löseelement 63 auf den Fixierkörper 60 aufgeclipt/ aufgeschoben werden kann. In der Figur 3 werden die Fixierkörperkomponenten Fixierkörper 60 und Fixierkörper 60' miteinander verschraubt dargestellt. Andere Befestigungsmethoden und/ oder Fügemethoden sind denkbar und möglicherweise sinnvoll. Weiterhin ist in der dargestellten Ausführungsform dem Löseelement 63 keine Fahne zugeordnet. Um eine ausreichende Befestigung von der ersten Halteform 2 und der zweiten Halteform 5 zu erreichen, wird das Federelement 61 als Spiralfederelement ausgeführt.

In der Figur 4 wird die Ausführung des erfindungsgemäßen Haltemittels 6 ohne ein Steckverbindergehäuse 1 deutlich. Hierbei ist das Fixierelement 62 nur angedeutet, um das Zusammenspiel des Fixierkörpers 60 mit dem Löseelement 63 innerhalb des Fixierelements 62 besser aufzuzeigen. Das Löseelement 63 ist hierbei, wie zuvor erwähnt, als hülsenförmiger Clip ausgeführt.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Steckverbindergehäuse
- 2: Erste Halteform
- 3: Kontakteinsatz
- 4: Befestigungsrahmen
- 5: Zweite Halteform
- 6: Haltemittel

- 60: Fixierkörper
- 61: Federelement
- 62: Fixierelement
- 63: Löseelement
- 64: Fahne
- 65: Rastelement
- 66: Rastform
- 67: Kopf

- S: Steckrichtung
- D: Druckbewegung
- F: Federkraft

## Patentansprüche

1. Elektrischer Steckverbinder, aufweisend ein Steckverbindergehäuse (1) mit einer Kabeldurchführungsöffnung, einer Verbindungsöffnung, zumindest einer ersten Halteform (2) und zumindest einem Kontakteinsatz (3), wobei der Kontakteinsatz (3) zumindest ein Kontaktelement und/oder zumindest ein Steckverbindermodul und/oder ein halbes Steckverbindermodul aufnimmt und der Kontakteinsatz (3) zumindest einen Befestigungsrahmen (4) aufweist, welcher zumindest eine zweite Halteform (5) aufweist, wobei die zweite Halteformen (5) mit der ersten Halteform (2) korrespondiert, wobei zumindest ein Haltemittel (6) mit der ersten Halteform (2) und der korrespondierenden zweiten Halteform (5) interagiert und wobei der Befestigungsrahmen (4) mit Hilfe des Haltemittels (6) im Steckverbindergehäuse (1) gehalten wird
**dadurch gekennzeichnet, dass**
das Haltemittel (6) zumindest ein Fixierkörper (60), ein Federelement (61) und eine Fixierelement (62) aufweist.

2. Elektrischer Steckverbinder nach einem der vorstehenden Ansprüche **dadurch gekennzeichnet, dass** das Haltemittel (6) als Niet, insbesondere als Spreizniet, ausgeführt ist.

3. Elektrischer Steckverbinder nach einem der vorstehenden Ansprüche **dadurch gekennzeichnet, dass** das Haltemittel (6) als Schnellverschluss, insbesondere als Vierteldrehverschluss ausgeführt ist.

4. Elektrischer Steckverbinder nach einem der vorstehenden Ansprüche **dadurch gekennzeichnet, dass** das Haltemittel (6) ein Löseelement (63) aufweist.

5. Elektrischer Steckverbinder nach einem der vorstehenden Ansprüche **dadurch gekennzeichnet, dass** das Löseelement (63) mit zumindest einer Fahne (64) in Verbindung steht, welche nach Betätigung des Haltemittels (6) im Wesentlichen von einem Fixierkörper (60) weist, wodurch der Eingriff des Haltemittels (6) in der Halteeinrichtung (2) signalisiert ist.

6. Elektrischer Steckverbinder nach einem der vorstehenden Ansprüche
**dadurch gekennzeichnet, dass**
das Fixierelement (62) mit der ersten Halteform (2) des Steckverbindergehäuses (1) in Eingriff gebracht ist.

7. Elektrischer Steckverbinder nach einem der vorstehenden Ansprüche
**dadurch gekennzeichnet, dass**
das Haltemittel (6) durch eine erste Druckbewegung (D) des Fixierkörpers (60) in Richtung des Steckverbindergehäuses (1) der Fixierkörper (60) lösbar mit dem Fixierelement (62) in Eingriff gebracht wird.

8. Elektrischer Steckverbinder nach Anspruch 7
**dadurch gekennzeichnet, dass**
das durch eine zweite Druckbewegung (D) des Fixierkörpers (60) in Richtung des Steckverbindergehäuses (1) der Fixierkörper (60) aus dem Fixierelement (62) gelöst wird.

9. Elektrischer Steckverbinder nach einem der vorstehenden Ansprüche **dadurch gekennzeichnet, dass** das Haltemittel (6) grundsätzlich im Push-Push Prinzip einsetzbar und lösbar ist.

10. Elektrischer Steckverbinder nach einem der vorstehenden Ansprüche
**dadurch gekennzeichnet, dass**
das Haltemittel (6) durch eine erste Rotationsbewegung entlang der Längsachse des Fixierkörpers (60) der Fixierkörper (60) lösbar mit dem Fixierelement (62) in Eingriff gebracht wird.

11. Elektrischer Steckverbinder nach Anspruch 10
**dadurch gekennzeichnet, dass**
das Haltemittel (6), insbesondere der Fixierkörper (60) zusätzlich mit einer ersten Druckbewegung (D) beaufschlagt wird.

12. Elektrischer Steckverbinder nach Anspruch 10
**dadurch gekennzeichnet, dass**
das Haltemittel (6) durch eine zweite Rotationsbewegung entlang der Längsachse des Fixierkörpers (60) der Fixierkörper (60) von dem Fixierelement (62) im Wesentlichen gelöst wird.

13. Verfahren zur Verbindung eines Kontakteinsatzes (3) mit einem Steckverbindergehäuse (1), wobei das Steckverbindergehäuse (1) zumindest eine erste Halteform (2) aufweist und wobei der Kontakteinsatz (3) zumindest eine zweite Halteform (5) aufweist, wobei die erste Halteform (2) mit der zweiten Halteform (5) korrespondiert,
**dadurch gekennzeichnet, dass**
zur Verbindung des Kontakteinsatzes (3) mit dem Steckverbindergehäuse (1) zumindest ein Haltemittel (6) eingesetzt wird, welches einen Fixierkörper (60) ein Fixierelement (62) und ein Federelement (61) aufweist.

14. Verfahren nach Anspruch 13,
**dadurch gekennzeichnet, dass**
das Haltemittel (6) durch eine erste Druckbewegung (D) auf den Fixierkörper (60) in Richtung des Steckverbindergehäuses (1) in ein mit der ersten Halteform (2) in Eingriff stehendes Fixierelement (62) eingreift und das der Kontakteinsatz (3) mittels des Haltemittels (6) in der Steckrichtung (S) gegen versehentliches Lösen gesichert ist und entgegen der Steckrichtung (S) von der ersten Halteform (2) gegen versehentliches Lösen gesichert ist.

15. Verfahren nach Anspruch 14,
**dadurch gekennzeichnet, dass**
eine zweite Druckbewegung (D) auf den Fixierkörper (60) entgegen der Steckrichtung (S) das Haltemittel (6) derart aus der ersten Halteform (2) löst, dass der Fixierkörper (60) aus der ersten Halteform (2) entfernt werden kann.

16. Verfahren nach Anspruch 13,
**dadurch gekennzeichnet, dass**
das Haltemittel (6) durch eine erste Rotationsbewegung entlang der Längsachse des Fixierkörpers (60) in ein mit der ersten Halteform (2) in Eingriff stehendes Fixierelement (62) eingreift und das der Kontakteinsatz (3) mittels des Haltemittels (6) in der Steckrichtung (S) gegen versehentliches Lösen gesichert ist und entgegen der Steckrichtung (S) von der ersten Halteform (2) gegen versehentliches Lösen gesichert ist.
